# EUROPEAN PATENT APPLICATION

(11) **EP 2 418 809 A1**
(43) Date of publication of application: **15.02.2012**
(21) Application number: 09842886.5
(22) Date of filing: 18.08.2009
(51) Int. Cl.: H04L 12/54

(54) **METHOD AND APPARATUS FOR PROCESSING AND UPDATING SERVICE CONTENTS IN A DISTRIBUTED FILE SYSTEM**

(30) Priority: 09.04.2009 CN 200910081758
(71) Applicant: ZTE Corporation, Shenzhen, Guangdong 518057 (CN)
(72) Inventor: XIA, Jianbo, Shenzhen Guangdong 518057 (CN); PENG, Jie, Shenzhen Guangdong 518057 (CN); ZHANG, Bo, Shenzhen Guangdong 518057 (CN)
(74) Representative: Anderson, Angela Mary
(86) International application number: PCT/CN2009/073330
(87) International publication number: WO 2010/115325

(57) **Abstract**

The present invention discloses a method for processing service contents of a service node in a distributed file system: after receiving uploaded service contents, generating a file block, and said file block being stored in at least one service node, and the service node which does not store said file block storing a virtual file block corresponding to said file block, and configuring an attribute list of said virtual file block. Meanwhile, the present invention discloses a method for updating service contents : after receiving an on-demand request of a file block, the service node judging whether it is a virtual file block, and if yes, according to information of at least one access address of said file block in the attribute list of said virtual file block, reading said file block and responding to said on-demand request, and updating an access popularity value of said virtual file block, and judging whether an updated access popularity value reaches a threshold, and if said set threshold is reached, downloading said file block into said service node, and clearing or emptying the attribute list of said virtual file block, or deleting virtual identity information. Meanwhile, the present invention discloses an apparatus implementing above methods. The present invention is simple and practical.

## Description

### Technical Field

The present invention relates to the service contents processing and updating technique in the distributed file system, and particularly, to a method and apparatus for processing and updating service contents in a service node in a distributed file system.

### Background of the Related Art

The distributed file system is widely applied in servers of video services such as the Internet Protocol Television (IPTV) and so on, and is used for managing storage and reading of service data in the single service node (providing services for an area or a part of users). With the continuous advancement of the service diversity requirement of the users, the quantity of the service data which requires storing in service applications becomes larger and larger, and each service node in the distributed file system should provide the complete service, and a large amount of the storage capacity is required, which will cause that the cost of the whole distributed file system is increased greatly, and the great pressure is brought to operators.

In order to solve the above problem, the distributed file system commonly uses the scheduling method of service contents, namely all the service contents is dispersedly stored in each service node, and a single service node doesn't store all the service contents, but the service content directories provided by each service node are the same, and when a user demands the service contents in a certain service node which are not stored in this node, this service node searches for other nodes storing the on-demand service contents, and caches on-demand service contents of the user in the local service node, and then provides for the requesting user.

Using the above scheduling method of service contents can greatly save the storage capacity of each service node in the distributed file system, thereby reducing the organizing cost of the distributed file system. However, drawbacks still exist. In the scheduling method of service contents, the service node does not have corresponding service contents, and when there are more users' on-demand requests for this service contents in this service node, although the service can be provided for users from other service nodes, broader bandwidth of the distributed file system requires consuming, and when the number of on-demand users is larger, the quality of the provided services is difficult to be guaranteed.

### Summary of the Invention

Based on this, the main purpose of the present invention is to provide a method and apparatus for processing and updating service contents of a service node in a distributed file system, which improves the service quality of the popular service contents and makes the occupied storage capacity smaller.

In order to achieve the above purpose, the technical scheme of the present invention is implemented as follows:
a method for processing service contents of a service node in a distributed file system comprises:
   after receiving uploaded service contents, the distributed file system generating a file block according to said service contents, and said file block being stored in at least one said service node, and said service node which does not store said file block storing a virtual file block corresponding to said file block, and configuring an attribute list of said virtual file block, and said attribute list including virtual identity information, access popularity value information and information of at least one access address of said file block.

Preferably, a name and an attribute value of said virtual file block is the same as that of said file block.

Preferably, the step of the distributed file system generating the file block according to said service contents comprises:
said distributed file system directly taking said service contents as the file block, or dividing said service contents into at least two service content blocks which are taken as the file blocks.

A method for updating service contents of a service node in a distributed file system comprises:
after receiving an on-demand request of a file block, the service node judging whether an on-demand file block is a virtual file block, and if yes, according to information of at least one access address of said file block corresponding to said virtual file block in an attribute list of said virtual file block, reading said file block and responding to said on-demand request, and at the same time, updating an access popularity value in the attribute list of said virtual file block in said service node, and judging whether an updated access popularity value reaches a set threshold, and if said set threshold is reached, according to said information of at least one access address of said file block, downloading said file block into said service node, and clearing or emptying the attribute list of said virtual file block, or deleting virtual identity information in the attribute list of said virtual file block.

Preferably, the step of the service node judging whether the on-demand file block is the virtual file block comprises:
according to an identifier of said on-demand file block, searching whether the on-demand file block includes the attribute list or judging whether a searched-out attribute list is not empty, or judging whether the searched-out attribute list includes the virtual identity information, and if yes, said on-demand file block being judged as the virtual file block.

Preferably, the step of updating the access popularity value in the attribute list of said virtual file block in said service node comprises:
adding one to the access popularity value in the attribute list of said virtual file block in said service node.

An apparatus for processing service contents of a service node in a distributed file system, comprising:
an uploading unit, which is configured to upload service contents into the distributed file system;
a file block generating unit, which is configured to generate a file block according to said service contents uploaded by said uploading unit;
an issuing unit, which is configured to store said file block in at least one said service node, and store a virtual file block corresponding to said file block in said service node which does not store said file block; and
a configuring unit, which is configured to configure an attribute list for said virtual file block, said attribute list including virtual identity information, access popularity value information and information of at least one access address of said file block.

Preferably, a name and an attribute value of said virtual file block is the same as that of said file block.

An apparatus for updating service contents of a service node in a distributed file system, comprising:
a receiving unit, which is configured to receive an on-demand request of a file block;
a first judging unit, which is configured to judge whether an on-demand file block of said on-demand request is a virtual file block, and if yes, trigger a reading and responding unit;
the reading and responding unit, which is configured to read said file block and respond to said on-demand request according to information of at least one access address of said file block corresponding to said virtual file block in an attribute list of said virtual file block, and at the same time trigger an updating unit;
the updating unit, which is configured to update an access popularity value in the attribute list of said virtual file block, and trigger a second judging unit;
the second judging unit, which is configured to judge whether an updated access popularity value in the attribute list of said virtual file block reaches a set threshold, and if said set threshold is reached, trigger a downloading and clearing unit; and
the downloading and clearing unit, which is configured to download said file block into said service node where said virtual file block is located according to said information of at least one access address of said file block, and clear or empty the attribute list of said virtual file block, or delete virtual identity information in the attribute list of said virtual file block.

Preferably, said updating unit updates the access popularity value in the attribute list of said virtual file block by a following mode:
adding one to the access popularity value in the attribute list of said virtual file block in said service node.

In the present invention, an attribute list is configured for the virtual file block in the service nodes, and the attribute list records the virtual identity information, access popularity value information and information of at least one access address of said file block, and after user demands a certain virtual file block in a certain service node, the access popularity value in the attribute list of the virtual file block is updated, namely adding one to the access popularity value, and comparing with the set threshold, and when the set threshold is reached, it is considered that the popularity of the file block corresponding to this virtual file block in this service node is higher, and according to the information of at least one access address of said file block in the attribute list of the virtual file block, said file block is downloaded to this service node, eliminating the virtual identity information of said file block. Thus, when other users demands said file block from this service node once more, this service node can directly provide services for users locally, and since it is unnecessary to cache the on-demand service contents from the remote service nodes any more, the service quality of service is improved, and since only the service contents of which the access popularity value exceeds the threshold are downloaded to the service nodes where user requests are more, the storage capacities of other service nodes will not be occupied, and it is unnecessary that every service node in the distributed file system is provided with a very large storage capacity, and implementation cost is lower. The implementation of the present invention is simple and practical.

### Brief Description of Drawings

FIG. 1 is a flow chart of the method for processing service contents of the service node in the distributed file system according to the present invention;
FIG. 2 is a flow chart of the method for updating service contents of the service node in the distributed file system according to the present invention;
FIG. 3 is a structure schematic diagram of the apparatus for processing service contents of the service node in the distributed file system according to the present invention; and
FIG. 4 is a structure schematic diagram of the apparatus for updating service contents of the service node in the distributed file system according to the present invention.

### Preferred Embodiments of the Present Invention

The basic idea of the present invention is: configuring an attribute list for a virtual file block in the service nodes, and the attribute list recording the virtual identity information, access popularity value information and information of at least one access address of said file blocks, and after a user demands a certain virtual file block in a certain service node, updating the access popularity value in the attribute list of the virtual file block, namely adding one to the access popularity value, and comparing with a set threshold, and when the set threshold is reached, it being considered that the file block corresponding to this virtual file block has a higher popularity in this service node, and according to the information of at least one access address of said file block in the attribute list of the virtual file block, downloading said file block to this service node, and deleting the virtual identity information of said file block. Thus, when other users demand said file block from this service node once more, this service node can directly provides the service for the users locally, and since it is unnecessary to cache the on-demand service contents from the remote service node, the service quality of the service is improved, and since only the service contents of which the access popularity values exceed the threshold are downloaded to the service nodes where the user requests are more, the storage capacities of other service nodes will not be occupied, and it is unnecessary to provide a very large storage capacity for every service node in the distributed file system, and the implementation cost is lower. The implementation of the present invention is simple and practical.

In order to make the purpose, technical scheme and advantages of the present invention clearer, the following will further describe the present invention in detail with reference to examples and figures.

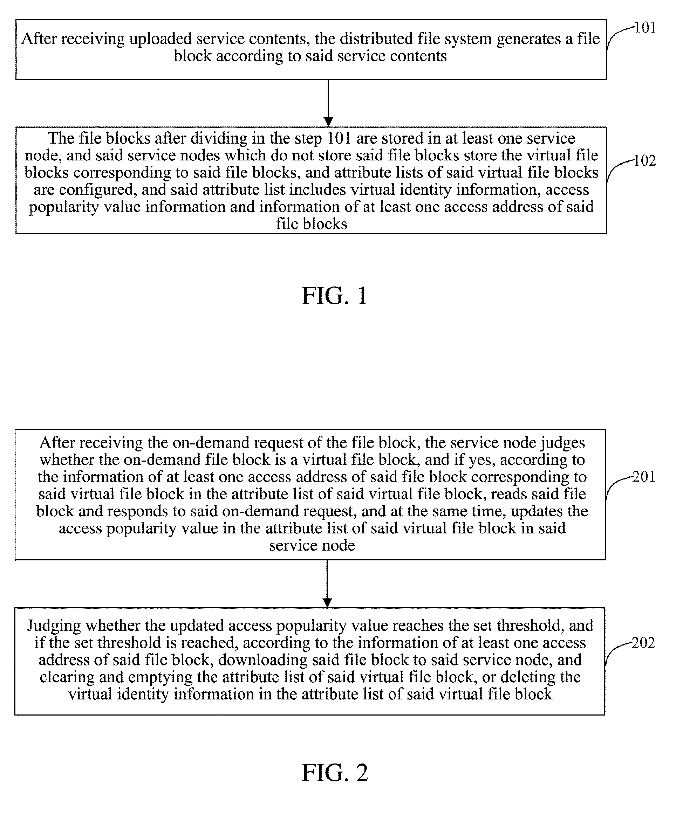

FIG. 1 is a flow chart of the method for processing service contents of the service node in the distributed file system according to the present invention, and as shown in FIG. 1, the method for processing service contents of the service node in the distributed file system according to the present invention comprises following steps:
step 101: after receiving uploaded service contents, the distributed file system generates a file block according to said service contents.

The distributed file system provides an uploading interface of service contents for the maintenance people, who can upload various service contents by the uploading interface, and said service contents include various video files and audio files, such as movies or songs and so on. The implementation of the uploading interface is easy, and through providing an uploading interface of service contents for the maintenance people and setting a corresponding identity verification code, the user who passes the identity verification can implement the upload of service contents, and the uploading interface is maintained by operators. After receiving service contents uploaded by the maintenance people, the distributed file system generates file blocks based on the uploaded service contents according to users' requirements and operating features of the distributed file system. Since the distributed file system of the present invention is mainly regarding the on-demand services and generally provides classical movie clips, or songs and song clips for users so that a variety of user demands can be carried out, for the uploaded whole movies or songs, the service contents requires dividing into at least one file block according to users' requirements or operating requirements, and then the file blocks after dividing are issued to each service node in the distributed file system for user demands. The division of the service contents can use existing dividing software to be implemented. If the service contents themselves uploaded by the maintenance people are the file blocks which comply with requirements or have been divided before uploading, the service contents are not divided any more.

Step 102: the file blocks after dividing in the step 101 are stored in at least one service node, and said service nodes which do not store said file blocks store the virtual file blocks corresponding to said file blocks, and attribute lists of said virtual file blocks are configured, and said attribute list includes virtual identity information, access popularity value information and information of at least one access address of said file blocks.

The step 102 implements the issue of the file blocks, namely issuing all the file blocks in the distributed file system to each service node for user demands. However, all the file blocks cannot be stored in each service node, since storing all the file blocks in each service node will cause that the storage capacity of each service node in the distributed file system is quite large and the cost of the distributed file system is higher, and thus the present invention dispersedly stores all the file blocks in the distributed file system into each service node in the distributed file system so that all the service nodes share the storage task of file blocks, however, when the directory of file blocks is provided, it is the directory of all the file blocks in the distributed file system, namely virtual file blocks existing in the service nodes. The concept of the virtual file block is that said file block is not stored in the service node showing the directory of this virtual file block, but stored in other service nodes. When the file block is stored in the service nodes, a folder of the file block can be configured in the corresponding service node, and said file block is stored in the corresponding folder, and the name, various attribute values such as the file type, size and establishment time and so on of the issued virtual file block in the service node is the same as that of the practical file block, and the user-oriented information of the virtual file block is completely the same as that of the practical file block, and the user does not know which file blocks are not stored in the service node which receives the on-demand request, and this information is shielded for users. Each file block in the distributed file system is at least stored in one service node.

An attribute list is configured for the virtual file block in the service node, and said attribute list at least includes virtual identity information, access popularity value information and information of at least one access address of said file block, and the virtual identity is used for identifying that the file block is a virtual file block, the accessing popularity value is used for quantifying the times of user demanding said file block in a set time segment, for example, the on-demand times of a certain file block in its located service node in 1 hour, and the more the on-demand times in the set time segment is, the larger the access popularity value of said file block is. The storage addresses of the practical file block corresponding to the virtual file block are that after receiving the on-demand request of the user, according to the recorded storage address of the practical file block in the attribute list of this virtual file block, reading the file block from the service node which stores said practical file block and caching the file block in the service node where the on-demand virtual file block is located, and sending the cached file block data to requesting users, and playing the data of this file block to users. Thus, when the user requests on-demand service from the service nodes, although the requested is a virtual file block, the required service data still can be obtained, and the corresponding service node will update the access popularity value information in the attribute list of the virtual file block, namely adding one to the access popularity value.

FIG. 2 is a flow chart of the method for updating service contents of a service node in the distributed file system according to the present invention, and as shown in FIG. 2, the method for updating service contents of the service node in the distributed file system according to the present invention comprises following steps:
step 201: after receiving the on-demand request of the file block, the service node judges whether the on-demand file block is a virtual file block, and if yes, according to the information of at least one access address of said file block corresponding to said virtual file block in the attribute list of said virtual file block, reads said file block and responds to said on-demand request, and at the same time, updates the access popularity value in the attribute list of said virtual file block in said service node.

After receiving the on-demand request of the file block, the service node judging whether the on-demand file block is a virtual file block specifically can be determined by searching whether the on-demand file block is configured with an attribute list, and if the distributed file system configures the attribute list for the virtual file blocks but does not configure the attribute list for the non-virtual file blocks, the on-demand file block configured with the attribute list is the virtual file block. But if the virtual file block is converted into the practical file block, and if the service node only empties the attribute list or only deletes the corresponding information such as the virtual identity information in the attribute list, whether the on-demand file block is a virtual file block can be determined by judging whether the attribute list in the virtual file block includes the virtual identity information, and if the virtual identity information is included, the on-demand file block is the virtual file block. If the on-demand file block is the virtual file block, according to the information of at least one access address of said file block corresponding to the virtual file block in the attribute list of this virtual file block, said file block is read, and the data of the read file block are cached in said service node, and the cached data of the read file block are used to responding to the on-demand request of the user, and the on-demand file block is played for the user, and said service node adds one to the counting value of the access popularity value in the attribute list of said virtual file block. The access popularity value is a dynamic value, and when each set counting period arrives, this access popularity value will be automatically cleared to zero and re-counted, and after the user requests to demand said virtual file block, said service node adds one to the counting value of the access popularity value.

Step 202: it is judged whether the updated access popularity value reaches the set threshold, and when the set threshold is reached, according to the information of at least one access address of said file block, said file block is downloaded to said service node, and the attribute list of said virtual file block is cleared or emptied, or the virtual identity information in the attribute list of said virtual file block is deleted.

After updating the access popularity value of said virtual file block, said service node judges whether this updated access popularity value reaches the set threshold, and if the set threshold is reached, it is denoted that the on-demand frequency of said virtual file block in said service node is higher, and according to the information of at least one access address in the attribute list of said virtual file block, the practical file block corresponding to said virtual file block is downloaded into said service node so that when users demand the file block over again, the local data of the file block are directly responded to the on-demand user so as to improve the response speed of the on-demand services of users and upgrade the service quality of service, and after downloading file is done, the attribute list of said virtual file block in said service node is emptied or directly deleted or only the virtual identity information in the attribute list of said virtual file block is deleted so as to denote that said file block is not a virtual file block any more. The mode of said service node configuring said virtual file block to be a non-virtual file block is related to the mode of defining the virtual file block and non-virtual file block in the distributed file system, and judging whether said file block is a virtual file block is also related to this mode. The set threshold of the access popularity value is an empirical value, which is set according to the practical system.

The person skilled in the art should understand that besides the technical scheme comprised by the method for updating service contents of the service node in the distributed file system shown in FIG. 2 itself, the technical scheme also can be comprised by the combination of the method for updating service contents of the service node in the distributed file system with the method for processing service contents of the service node in the distributed file system shown in FIG. 1, and at this time, after steps 101 and 102 shown in FIG. 1, also comprises steps 201 and 202 shown in FIG. 2.

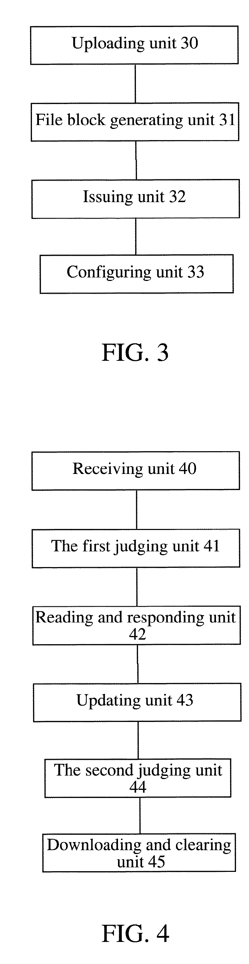

FIG. 3 is a structure schematic diagram of the apparatus for processing service contents of the service node in the distributed file system according to the present invention, and as shown in FIG. 3, the apparatus for processing service contents of the service node in the distributed file system according to the present invention comprises an uploading unit 30, a file block generating unit 31, an issuing unit 32 and a configuring unit 33, wherein the uploading unit 30 is used for uploading service contents to the distributed file system; the uploading unit 30 can be implemented by an uploading interface, and maintenance people can upload various service contents through the uploading unit 30. The file block generating unit 31 is used for generating file blocks according to said service contents uploaded by the uploading unit 30; namely the uploaded service contents being divided into at least one file block according to service requirements or user requirements and so on, and when the uploaded service contents comply with the issuing requirements or have been divided into file blocks before uploading, directly taking said service contents as the file block. The issuing unit 32 is used for storing said file block in at least one said service node, and storing the virtual file block corresponding to said file block in the service nodes which do not store said file block; the issuing unit 32 issues the file block generated by the file block generating unit 31 to each service node in the distributed file system, and the directories of the file blocks in each service node are the same, wherein in the service nodes which do not store the practical file block, this file block is configured as the virtual file block. The name and various attribute values such as the file type, size and establishment time and so on of the virtual file blocks issued in the service nodes are the same as that of the practical file block. The configuring unit 33 is used for configuring an attribute list for said virtual file block, and said attribute list includes virtual identity information, access popularity value information and information of at least one access address of said file block.

The person skilled in the art should understand that the apparatus for processing service contents of the service node in the distributed file system according to the present invention shown in FIG. 3 is designed for implementing the method for processing service contents of the service node in the distributed file system shown in FIG. 1, and implementing functions of each processing unit in the apparatus shown in FIG. 3 can refer to the related description in the method shown in FIG. 1 to be understood, and functions of each unit can be implemented by running programs on processors, and also can be implemented by corresponding logical circuits.

FIG. 4 is a structure schematic diagram of the apparatus for updating service contents of the service node in the distributed file system according to the present invention, and as shown in FIG. 4, the apparatus for updating service contents of the service node in the distributed file system according to the present invention comprises a receiving unit 40, a first judging unit 41, a reading and responding unit 42, an updating unit 43, a second judging unit 44 and a downloading and clearing unit 45, wherein the receiving unit 40 is used for receiving the on-demand request of the file block; said on-demand request is from various users. The first judging unit 41 is used for judging whether the on-demand file block of said on-demand request is a virtual file block, and if yes, triggering the reading and responding unit 42; specifically, whether the on-demand file block of said on-demand request is a virtual file block can be judged according to whether the requested file block includes the attribute list, or according to whether the attribute list of said file block includes virtual identity information, and if yes, the on-demand file block is a virtual file block. The reading and responding unit 42 is used for reading said file block and responding to said on-demand request according to the information of at least one access address of said file block corresponding to said virtual file block in the attribute list of said virtual file block, and at the same time, triggering the updating unit 43. The updating unit 43 is used for updating the access popularity value in the attribute list of said virtual file block, and triggering said second judging unit 44, and herein updating the access popularity value in the attribute list of said virtual file block is adding one to the counting value of the access popularity value. The second judging unit 44 is used for judging whether the updated access popularity value in the attribute list of the virtual file block reaches the set threshold, and when the set threshold is reached, triggering the downloading and clearing unit 45; the threshold of the access popularity value is an empirical value, and different systems have different empirical values. The downloading and clearing unit 45 is used for downloading said file block into said service node where said virtual file block is located according to the information of at least one access address of said file block, and clearing or emptying the attribute list of said virtual file block, or deleting the virtual identity information in the attribute list of said virtual file block.

The person skilled in the art should understand that the apparatus for updating service contents of the service node in the distributed file system according to the present invention shown in FIG. 4 is designed for implementing the method for updating service contents of the service node in the distributed file system shown in FIG. 2, and implementing functions of each processing unit in the apparatus shown in FIG. 4 can refer to the related description in the method shown in FIG. 2 to be understood, and the functions of each unit can be implemented by running programs on processors, and also can be implemented by corresponding logical circuits.

The apparatus for updating service contents of the service node in the distributed file system shown in FIG. 4 further can comprise the apparatus for processing service contents of the service node in the distributed file system shown in FIG. 3.

The above description is only the preferable examples of the present invention, which is not used for limiting the protection scope of the present invention.

### Industrial Applicability

In the present invention, an attribute list is configured for the virtual file block in the service nodes, and the attribute list records the virtual identity information, access popularity value information and information of at least one access address of said file block, and after user demands a certain virtual file block in a certain service node, the access popularity value in the attribute list of the virtual file block is updated, namely adding one to the access popularity value, and comparing with the set threshold, and when the set threshold is reached, it is considered that the popularity of the file block corresponding to this virtual file block in this service node is higher, and according to the information of at least one access address of said file block in the attribute list of the virtual file block, said file block is downloaded to this service node, and eliminating the virtual identity information of said file block. Thus, when other users demand said file block from this service node once more, this service node can directly provide services for users locally, and since it is unnecessary to cache the on-demand service contents from the remote service nodes any more, the service quality of service is improved, and since only the service contents of which the access popularity value exceeds the threshold are downloaded to the service nodes where user requests are more, the storage capacities of other service nodes will not be occupied, and it is unnecessary that every service node in the distributed file system is provided with a very large storage capacity, and implementation cost is lower. The implementation of the present invention is simple and practical.

## Claims

1. A method for processing service contents of a service node in a distributed file system, comprising:
after receiving uploaded service contents, the distributed file system generating a file block according to said service contents, and said file block being stored in at least one said service node, and said service node which does not store said file block storing a virtual file block corresponding to said file block, and configuring an attribute list of said virtual file block, and said attribute list including virtual identity information, access popularity value information and information of at least one access address of said file block.

2. The method as claimed in claim 1, wherein a name and an attribute value of said virtual file block is the same as that of said file block.

3. The method as claimed in claim 1, wherein the step of the distributed file system generating the file block according to said service contents comprises:
said distributed file system directly taking said service contents as the file block, or dividing said service contents into at least two service content blocks which are taken as the file blocks.

4. A method for updating service contents of a service node in a distributed file system, comprising:
after receiving an on-demand request of a file block, the service node judging whether an on-demand file block is a virtual file block, and if yes, according to information of at least one access address of said file block corresponding to said virtual file block in an attribute list of said virtual file block, reading said file block and responding to said on-demand request, and at the same time, updating an access popularity value in the attribute list of said virtual file block in said service node, and judging whether an updated access popularity value reaches a set threshold, and if said set threshold is reached, according to said information of at least one access address of said file block, downloading said file block into said service node, and clearing or emptying the attribute list of said virtual file block, or deleting virtual identity information in the attribute list of said virtual file block.

5. The method as claimed in claim 4, wherein the step of the service node judging whether the on-demand file block is the virtual file block comprises:
according to an identifier of said on-demand file block, searching whether the on-demand file block includes the attribute list or judging whether a searched-out attribute list is not empty, or judging whether the searched-out attribute list includes the virtual identity information, and if yes, said on-demand file block being judged as the virtual file block.

6. The method as claimed in claim 4, wherein the step of updating the access popularity value in the attribute list of said virtual file block in said service node comprises:
adding one to the access popularity value in the attribute list of said virtual file block in said service node.

7. An apparatus for processing service contents of a service node in a distributed file system, comprising:
an uploading unit, which is configured to upload service contents into the distributed file system;
a file block generating unit, which is configured to generate a file block according to said service contents uploaded by said uploading unit;
an issuing unit, which is configured to store said file block in at least one said service node, and store a virtual file block corresponding to said file block in said service node which does not store said file block; and
a configuring unit, which is configured to configure an attribute list for said virtual file block, said attribute list including virtual identity information, access popularity value information and information of at least one access address of said file block.

8. The apparatus as claimed in claim 7, wherein a name and an attribute value of said virtual file block is the same as that of said file block.

9. An apparatus for updating service contents of a service node in a distributed file system, comprising:
a receiving unit, which is configured to receive an on-demand request of a file block;
a first judging unit, which is configured to judge whether an on-demand file block of said on-demand request is a virtual file block, and if yes, trigger a reading and responding unit;
the reading and responding unit, which is configured to read said file block and respond to said on-demand request according to information of at least one access address of said file block corresponding to said virtual file block in an attribute list of said virtual file block, and at the same time trigger an updating unit;
the updating unit, which is configured to update an access popularity value in the attribute list of said virtual file block, and trigger a second judging unit;
the second judging unit, which is configured to judge whether an updated access popularity value in the attribute list of said virtual file block reaches a set threshold, and if said set threshold is reached, trigger a downloading and clearing unit; and
the downloading and clearing unit, which is configured to download said file block into said service node where said virtual file block is located according to said information of at least one access address of said file block, and clear or empty the attribute list of said virtual file block, or delete virtual identity information in the attribute list of said virtual file block.

10. The apparatus as claimed in claim 9, wherein said updating unit updates the access popularity value in the attribute list of said virtual file block by a following mode:
adding one to the access popularity value in the attribute list of said virtual file block in said service nod
